# EUROPÄISCHE PATENTANMELDUNG

(11) **EP 0 766 986 A1**
(43) Veröffentlichungstag der Anmeldung: **09.04.1997**
(21) Anmeldenummer: 96114573.7
(22) Anmeldetag: 12.09.1996
(51) Int. Cl.: B01D 17/00, B01D 53/14

(54) **Verfahren zur Entsalzung von glykolstämmigen Lösemitteln für Gaswäschen**

(30) Priorität: 04.10.1995 DE 19536941
(71) Anmelder: HOECHST AKTIENGESELLSCHAFT, 65929 Frankfurt am Main (DE)
(72) Erfinder: Streitberger, Horst, 84503 Altötting (DE); Rüffer, Hans-Martin, Dr., 65719 Hofheim (DE)

(57) **Zusammenfassung**

Die Erfindung betrifft ein Verfahren zum Entfernen von Salzen oder wasserlöslichen Stoffen aus einer nichtwäßrigen, mit Wasser mischbaren Waschflüssigkeit in Gaswäschen, dadurch gekennzeichnet, daß man der Waschflüssigkeit Wasser zuführt bis sich aus der Waschflüssigkeit eine wäßrige Phase ausscheidet und daß man diese wäßrige Phase abzieht.
Die Vorteile des erfindungsgemäßen Verfahrens sind im wesentlichen darin zu sehen, daß es die Aufsalzung der Waschmedien durch eine ständige Entfernung von Salzen aus solchen Waschprozessen umgeht.

Für das Verfahren besonders geeignete Alkylether stellen z.B. die Polyethylenglykoldimethylether mit einem mittleren Molgewicht zwischen 200 bis 700, bevorzugt 250 bis 550 dar. Entsprechende Verbindungen werden z.B. von der Hoechst AG (D-65926 Frankfurt am Main) unter dem Handelsnamen ®Genosorb vertrieben.

## Beschreibung

Die Erfindung betrifft ein Verfahren zum Entfernen von Salzen oder wasserlöslichen Stoffen aus einer nichtwäßrigen, mit Wasser mischbaren Waschflüssigkeit in Gaswäschen.

Die Verwendung von organischen Lösemitteln zur Entfernung unerwünschter saurer Bestandteile, wie H₂S und SO₂ sowie CO₂ aus Natur-, Synthese- und Rauchgasen ist bekannt. Diese Verfahren bilden einen wichtigen Bestandteil für die Umweltreinhaltung durch die Rückhaltung von Schadstoffgasen aus industriellen Prozessen. Viele solcher Gas-Reinigungsverfahren basieren auf dem Einsatz glykolstämmiger Lösemittel - in diesem Zusammenhang als Waschflüssigkeiten bezeichnet - wie z.B. Reinstoffe oder Mischungen von Polyglykoldialkylethern bzw. Polyethylenglykolverbindungen mit 2 - 12 [CH₂-CH₂-O]-Einheiten oder entsprechende Mono- und Dietherverbindungen mit bis zu 16 [CH₂-CH₂-O]-Einheiten. Diese Waschflüssigkeiten bieten eine Reihe von Vorteilen. So besitzen sie ein hohes und häufig spezifisches Lösevermögen für Gase wie H₂S, SO₂ und CO₂, verfügen insbesondere bei längerkettigen Verbindungen über nur geringe Dampfdrücke und haben niedrige Viskositäten, die sie für den Einsatz in Wäschern oder Absorbern qualifizieren. Die Kommission Reinhaltung der Luft im deutschen VDI und DIN berichtet regelmäßig über den Stand der Technik, stellvertretend sei auf den VDI-Bericht 1034 vom März 1993 verwiesen.
In der Literatur werden zahlreiche Verfahrensvarianten solcher Waschprozesse geschildert, die im allgemeinen aus einer Absorberstufe zur Abreicherung der unerwünschten Stoffe aus dem Gasstrom und einer Desorptions- bzw. Regenerationsstufe zur Entfernung der Stoffe aus dem beladenen Solvenz und Überführung derselben in eine verwertbare oder deponierbare Form bestehen. Als Beispiel ist das ®Solinox-Verfahren der deutschen Linde AG für die Entfernung von SO₂ genannt.
Andere Verfahren nutzen chemische Reaktionen der gelösten Gase in der Waschflüssigkeit aus wobei katalytisch wirkende Substanzen oder Oxidantien zugesetzt werden. Als Beispiele hierzu dient ein Verfahren gemäß DOS 2158072, das eine katalytische, in der Lösungsmittelphase ablaufende Claus-Reaktion zwischen H₂S und SO₂ zu Schwefel nutzt, und ein Verfahren gemäß EP-OS 0 066 306, bei dem Fe(III)chelate zur Oxidation von H₂S zu Schwefel eingesetzt werden, mit einer nachgeschalteten Oxidation der entstandenen Fe(II)chelate durch Luftsauerstoff.
Weitere Verfahren beruhen auch auf der spezifischen Wirkung bestimmter Glykolverbindungen. So ist bekannt, daß Methyl-isopropylether von Ethylenglykolen den Vorteil einer besonders hohen Lösegeschwindigkeit für H₂S und CO₂ für Gaswäschen besitzen (DOS 26 11 613).
All diesen Verfahren ist eine Kreislaufführung der eingesetzten Waschflüssigkeiten gemeinsam, die schon aus wirtschaftlichen Erwägungen nahezu quantitativ erfolgt. Das bringt einen entscheidenden Nachteil mit sich. Schwerflüchtige Verbindungen wie Schwefel, Kohlenwasserstoffe, Glykole oder anorganische Salze werden unter Umständen in der Regenerationsstufe nicht entfernt und reichern sich in die Waschflüssigkeit an. Dies kann negative Folgen für die Leistung des Absorbers haben oder ein häufiges Austauschen der Waschflüssigkeit erfordern. Um diesen Umstand zu begegnen, wurden Verfahren zur Entfernung von Schwefel aus der Waschflüssigkeit mit Hilfe von Kohlenstoffdisulfid (USP 3 915 674 ) oder der Entfernung von Glykolen aus Dialkyletherpolyglykol-Waschlösungen (USP 4 962 238) und flüssigen Kohlenwasserstoffen-Polyethersolventien (USP 4 334 102) entwickelt.
Die Anreicherung von Salzen ist besonders problematisch, da sich nach Erreichen der Sättigungsgrenze Salze in den Apparaturen abzulagern beginnen und den Betrieb beeinträchtigen. Die Herkunft solcher Salze erklärt sich z.B. durch den Eintrag in Form von Flugstaub oder aus Katalysator- und Pufferzugaben, vornehmlich aber durch die Absorption von Spurenverunreinigungen wie SO₃ und Reaktionen wie die Bildung von Sulfat durch SO₂-Oxidation durch Spuren von NOₓ. Häufig muß deshalb ein zusätzlicher Aufwand zur Vermeidung von Spurengase wie NOₓ
getrieben werden. Ein typisches Beispiel für dieses Problem bietet das Verfahren nach DOS 2158072, bei dem bisweilen nach mehrmonatiger Betriebsdauer die Anlage für mehrere Wochen zur Reinigung stillgelegt werden muß.

Der Erfindung lag daher die Aufgabe zugrunde, ein Verfahren bereitzustellen, das die Entsalzung der Waschflüssigkeit ermöglicht, um dadurch die genannten Nachteile zu vermeiden.

Es ist bekannt, daß Alkylether-Verbindungen der Polyglykole in der Zusammensetzung, wie sie als Waschflüssigkeiten in Gaswäschen verwendet werden, völlig oder zumindest in sehr weiten Verhältnissen mit Wasser mischbare Verbindungen sind. Es wurde jedoch überraschend festgestellt, daß verschiedene Alkyletherpolyglykole, die mit Salzen in Konzentrationen nahe der Sättigungsgrenze oder darüber beladen waren, durch den Zusatz von nur wenig Wasser oder mäßig konzentrierter wäßriger Salzlösung bei bestimmten Temperaturen zwei flüssige Phasen ausbilden, die leicht getrennt werden können. Die eine der beiden Phasen ist dabei wäßrig und enthält einen Großteil der Salze aus der Waschflüssigkeit gelöst. Die andere dieser Phasen enthält die von Salzen abgereicherte Waschflüssigkeit sowie nur geringe Gehalte an Wasser. Die wäßrige Phase enthält neben den Salzen nur geringfügige Anteile an Solvens und ist spezifisch schwerer als die nichtwäßrige. Konventionelle nicht-alkylierte Polyglykole, die bislang überwiegend für Gaswäschen in Absorbern eingesetzt wurden, zeigen diese Eigenschaft einer Phasentrennung dagegen nicht.

Die Aufgabe wird somit durch ein Verfahren der eingangs genannten Art gelöst, das dadurch gekennzeichnet ist, daß man der Waschflüssigkeit Wasser zuführt bis sich aus der Waschflüssigkeit eine wäßrige Phase ausscheidet und daß man diese wäßrige Phase abzieht.

Gegenstand der Erfindung ist also ein Verfahren zum Entfernen von Salzen oder wasserlöslichen Stoffen aus einer nichtwäßrigen, mit Wasser mischbaren Waschflüssigkeit in Gaswäschen, dadurch gekennzeichnet, daß man der Waschflüssigkeit Wasser zuführt bis sich aus der Waschflüssigkeit eine wäßrige Phase ausscheidet und daß man diese wäßrige Phase abzieht.

Weitere Ausführungsformen ergeben sich aus den Ansprüchen 2 bis 6. Es können auch einzelne oder mehrere der in den Ansprüchen beschriebenen Einzelmerkmale jeweils für sich eigenständige erfindungsgemäße Lösungen darstellen und es sind auch die Merkmale der Ausführungsformen beliebig kombinierbar.

Die Vorteile des erfindungsgemäßen Verfahrens sind im wesentlichen darin zu sehen, daß es die Aufsalzung der Waschmedien durch eine ständige Entfernung von Salzen aus solchen Waschprozessen umgeht.

Für das Verfahren besonders geeignete Alkylether stellen z.B. die Polyethylenglykoldimethylether mit einem mittleren Molgewicht zwischen 200 bis 700, bevorzugt 250 bis 550 dar. Entsprechende Verbindungen werden z.B. von der Hoechst AG (D-65926 Frankfurt am Main) unter dem Handelsnamen ®Genosorb vertrieben.
Weil alkylierte Polyglykol-Verbindungen gegenüber nicht-alkylierten Polyglykolen bei vergleichbaren fluiddynamischen Eigenschaften über verbesserte Löse- und Absorptionseigenschaften für die betreffenden Abgase verfügen, können herkömmliche, mit Polyethylenglykolen betriebene Anlagen häufig sogar zum Vorteil eines höheren Wirkungsgrades auf Alkyletherpolyglykole bzw. auf das erfindungsgemäße Verfahren umgestellt werden.

Das erfindungsgemäße Verfahren kann so genutzt werden, daß die im Kreislauf geführte Waschflüssigkeit an geeigneter Stelle aus dem Prozeß entnommen wird und bei einer Temperatur, die zwischen 20 und 100°C, bevorzugt zwischen 60 und 100°C, besonders bevorzugt zwischen 80 und 100°C und ganz besonders bevorzugt zwischen 90 und 100 °C liegt, mit einer geeigneten Menge Wasser vermischt wird. Wenn der Salzgehalt in der Waschflüssigkeit für eine Phasentrennung nicht ausreicht, ist es günstig, zusätzlich Salz zuzugeben. Nach Absetzten und Trennen der Phasen scheidet man wäßrige und organische Phase. Die organische Phase kann ggf. nach durchlaufen einer Trocknungstufe zur Verdampfung unerwünschter Wasserfeuchte in den Waschprozeß zurückgeführt werden. Die wäßrige Salzlösung wird ausgeschleust.

Das erfindungsgemäße Verfahren kann mit der ganzen Waschflüssigkeit, vorzugsweise aber mit Teilströmen z.B. über einen Bypassstrom durchgeführt werden.
Das erfindungsgemäße Verfahren kann diskontinuierlich oder kontinuierlich durchgeführt werden. Für den diskontinuierlichen Durchführung eignet sich z.B. ein einfacher temperierbarer Rührkessel, der als Mischer und gleichzeitig als Absetzer dient. Kontinuierliche Verfahren können mit Mixer-Settler-Einrichtungen, Dekantern oder Trennzentrifugen betrieben werden.

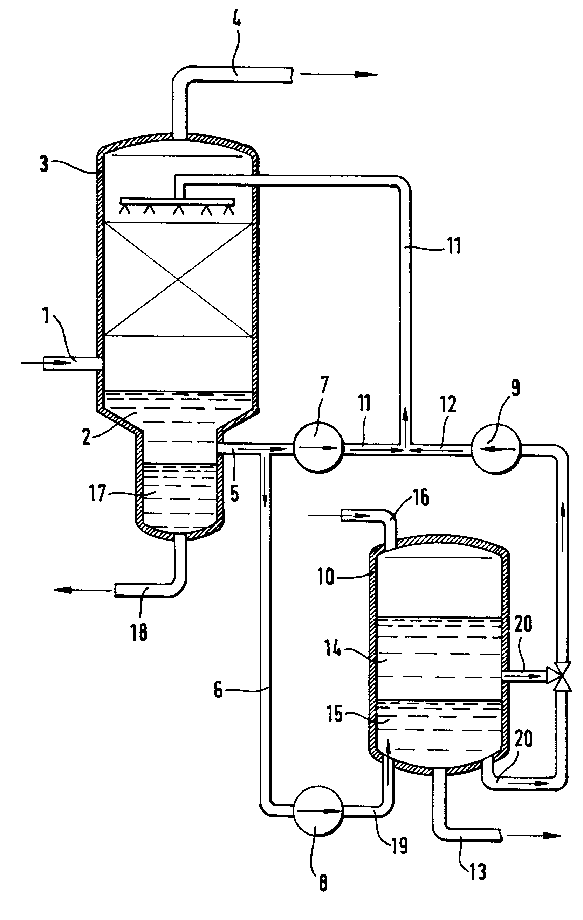

Im folgenden wird eine mögliche Ausführungsform des Verfahrens anhand des in der Figur dargestellten Verfahrensfließbildes näher erläutert.

Ein Abgas wird über eine Rohrleitung 1 einem senkrecht stehendem Gaswäscher 3 im unteren Drittel zugeführt und auf dem Weg nach oben zum Ausgang 4 mit einem glykolstämmigen Lösemittel gewaschen. Das Lösemittel wird durch Pumpen 7,9 über Rohrleitungen 5,11,12 in den Gaswäscher 3 oben eingeführt und sammelt sich dann im Sumpfteil des Gaswäschers 3 als Flüssigkeitssäule 2 auf einer Schwefelschmelze 17, die auf die eingangs erwähnte Claus-Reaktion zurückzuführen ist. Von dort kann es insgesamt oder zum Teil über eine Pumpe 8 und Rohrleitungen 5,6,19 einem Behälter 10 zugeführt werden, in dem es dann über einen Zulauf 16 mit Wasser versetzt wird, worauf sich eine wäßrige Phase 15 ausscheidet, die mit Salzen angereichert ist, und die über einen Ausgang 13 abgezogen wird. Die entsalzte Lösemittelphase 14 wird kann über Ausgänge 20 mit der Pumpe 9 diskontinuierlich oder kontinuierlich abgezogen und in den Gaswäscher 3 zurückgeführt werden. Die Schwefelschmelze 17 kann über eine Leitung 18 aus dem Sumpf des Gaswäschers 3 abgezogen werden.

Die folgenden Beispiele dienen der weiteren Erläuterung des Verfahrens.

### Beispiel 1

500 g Polyethylenglykol-Dimethylether mit einem mittleren Molgewicht von 500 kg/kmol wurde mit 15 g Natriumchlorid und 100 ml Wasser versetzt und bei 90 °C in Lösung gebracht. Danach wurde über ein Wasserstrahlvakuum das Wasser vollständig abgezogen und so eine Übersättigung des Lösungsmittels mit Salz hervorgerufen. Anschließend wurde schrittweise Wasser hinzugefügt und das Verhalten beobachtet. Nach Zugabe von 105 g Wasser trat eine Phasenabscheidung auf. Ober- und Unterphase wurden voneinander getrennt. Die Oberphase (545 g) bestand aus dem Polyglykolether und enthielt neben 15% Wasser nur noch 1% NaCl. (5,5 g). Die Unterphase (35 g) bestand aus einer konzentrierten Salzsole der Zusammensetzung 74% Wasser und 26% Salz ( 9,1 g).

### Vergleichsbeispiel 1

Der gleiche Versuch von Beispiel 1 wurde mit 500 g Polyethylenglykol mit einem mittleren Molgewicht von 400 kg/kmol anstelle des Polyethylenglykol-Dimethylethers durchgeführt. Bei der schrittweisen Zugabe von Wasser wurde anstelle einer Phasenabscheidung nach Zugabe von 65 g Wasser eine vollständige Löslichkeit beobachtet. Eine Phasentrennung trat nicht auf.

### Beispiel 2

500 g Polyethylenglykol-Dimethylether mit einem mittleren Molgewicht von 500 kg/kmol wurde mit 25 g Natriumchlorid und 100 ml Wasser versetzt und bei 90 °C in Lösung gebracht. Danach wurde über ein Wasserstrahlvakuum das Wasser vollständig abgezogen und so eine Übersättigung des Lösungsmittels mit Salz hervorgerufen. Anschließend wurde schrittweise Wasser hinzugefügt und das Verhalten beobachtet. Nach Zugabe von 125 g Wasser trat eine Phasenabscheidung auf. Ober- und Unterphase wurden voneinander getrennt. Die Oberphase (570 g) bestand aus dem Polyglykolether und enthielt neben 13 % Wasser nur noch 1% NaCl. (5,5 g). Die Unterphase (68 g) bestand aus einer konzentrierten Salzsole der Zusammensetzung 74,5% Wasser und 25,5% Salz ( 17,3 g).

### Vergleichsbeispiel 2

Der gleiche Versuch von Beispiel 2 wurde mit 500 g Polyethylenglykol mit einem mittleren Molgewicht von 400 kg/kmol anstelle des Polyethylenglykol-Dimethylethers durchgeführt. Bei der schrittweisen Zugabe von Wasser wurde anstelle einer Phasenabscheidung nach Zugabe von 95 g Wasser eine vollständige Löslichkeit beobachtet. Eine Phasentrennung trat nicht auf.

## Patentansprüche

1. Verfahren zum Entfernen von Salzen oder wasserlöslichen Stoffen aus einer nichtwäßrigen, mit Wasser mischbaren Waschflüssigkeit in Gaswäschen, dadurch gekennzeichnet, daß man der Waschflüssigkeit Wasser zuführt bis sich aus der Waschflüssigkeit eine wäßrige Phase ausscheidet und daß man diese wäßrige Phase abzieht.

2. Verfahren nach Anspruch 1, dadurch gekennzeichnet, daß man das Zuführen des Wassers oder das Abziehen der wäßrigen Phase kontinuierlich oder diskontinuierlich durchführt.

3. Verfahren nach Anspruch 1 oder 2, dadurch gekennzeichnet, daß man das Zuführen des Wassers bei einer Temperatur zwischen 20 °C, bevorzugt 60 °C, besonders bevorzugt 80 °C, ganz besonders bevorzugt 90 °C und 100 °C durchführt.

4. Verfahren nach einem oder mehreren der Ansprüche 1 bis 3, dadurch gekennzeichnet, daß die Waschflüssigkeit ein glykolstämmiges Lösemittel enthält.

5. Verfahren nach Anspruch 4, dadurch gekennzeichnet, daß das glykolstämmige Lösemittel einen Mono- oder Dialkylether eines Polyethylenglykols enthält.

6. Verfahren nach Anspruch 4 oder 5, dadurch gekennzeichnet, daß das glykolstämmige Lösemittel ein mittleres Molgewicht von 200 bis 700, vorzugsweise von 250 bis 550 aufweist.

7. Verwendung eines glykolstämmigen Lösemittels zur Durchführung des Verfahrens nach einem oder mehreren der Ansprüche 1 bis 3.

8. Vorrichtung zur Durchführung des Verfahrens nach einem oder mehreren der Ansprüche 1 bis 6, wobei die Vorrichtung einen Gaswäscher und einen Behälter, der am Boden einen Eingang und einen Ausgang aufweist, enthält, dadurch gekennzeichnet, daß der Sumpfteil des Gaswäschers mit dem Kopfteil des Gaswäschers und dem Eingang am Boden des Behälters verbunden ist und daß der Ausgang am Boden des Behälters mit dem Kopfteil des Gaswäschers verbunden ist.
